# EUROPÄISCHE PATENTSCHRIFT

(11) **EP 3 200 302 B1**
(45) Veröffentlichungstag und Bekanntmachung des Hinweises auf die Patenterteilung: **23.01.2019**
(21) Anmeldenummer: 17153118.9
(22) Anmeldetag: 25.01.2017
(51) Int. Cl.: H02J 3/14, H02J 3/38, H02J 7/35

(54) **VORRICHTUNG UND VERFAHREN FÜR DIE STEUERUNG EINES GEBÄUDEENERGIESYSTEMS**
APPARATUS AND METHOD FOR CONTROLLING A PREMISES ENERGY SYSTEM
DISPOSITIF ET PROCÉDÉ POUR PILOTER UN SYSTÈME D'ÉNERGY DES BÂTIMENTS

(30) Priorität: 26.01.2016 DE 102016201105
(43) Veröffentlichungstag der Anmeldung: 02.08.2017
(73) Patentinhaber: Viessmann Werke GmbH & Co. KG, 35108 Allendorf (DE)
(72) Erfinder: BIENIEK, Sebastian, 35066 Frankenberg (DE); HAFNER, Bernd, 35108 Allendorf (DE); SELIGER, Eckhard, 35108 Allendorf (DE); BROCKMANN, Robert, 60316 Frankfurt (DE); NEUMEIER, Markus, 34454 Bad Arolsen (DE); BÜHRING, Andreas, 79100 Freiburg (DE)
(74) Vertreter: MERH-IP Matias Erny Reichl Hoffmann Patentanwälte PartG mbB

(56) Entgegenhaltungen:
- EP-A1- 2 660 943
- EP-A1- 2 701 262
- EP-A1- 2 822 139

## Beschreibung

Die Erfindung betrifft eine Kontrolleinheit für die Steuerung eines Systems, insbesondere eines Gebäude-Energiesystems, ein entsprechendes Steuerungsverfahren, sowie ein Gebäude-Energiesystem. Insbesondere betrifft die Erfindung die Verbesserung des Energiemanagements eines solchen Systems, insbesondere eines solchen Gebäude-Energiesystems.

### Hintergrund der Erfindung

Im Stand der Technik sind Gebäude-Energiesysteme mit Photovoltaikmodulen, die auf den Dächern der jeweiligen Gebäude montiert sind, bekannt. Diese Photovoltaikmodule erzeugen elektrische Energie (bzw. Leistung) in Form von Strom in Abhängigkeit von der Intensität der Sonneneinstrahlung. Der so erzeugte Strom kann entweder für den Betrieb gebäudeinterner elektrischer Verbraucher, wie z.B. Wachmaschinen, Küchengeräte, oder Kühl- und Klimageräte, verwendet, oder an einem Netzanschlusspunkt des Gebäudes in das externe Stromnetz eingespeist werden. Zusätzliche für den Betrieb der gebäudeinternen elektrischen Verbraucher benötigte elektrische Energie kann dem externen Stromnetz über den Netzanschlusspunkt entnommen werden.

Abhängig von den aktuellen Witterungsbedingungen sowie dem aktuell vorliegenden gebäudeinternen Leistungsbedarf kann die Netzaustauschleistung positiv (d.h. die von den Photovoltaikmodulen bereitgestellte Leistung übersteigt die gebäudeintern benötigte Leistung) oder negativ (d.h. die gebäudeintern benötigte Leistung übersteigt die von den Photovoltaikmodulen bereitgestellte Leistung) sein. Daher ist bei vorbekannten Gebäude-Energiesystemen die Netzaustauschleistung regelmäßig weder dem Vorzeichen noch dem Absolutbetrag nach vorhersagbar.

Andererseits kann aus Sicht des Netzbetreibers Netzaustauschleistung mit vorgegebenem Vorzeichen (d.h. entweder positiv oder negativ) abhängig vom aktuellen Zustand des externen Stromnetzes wünschenswert sein. Insbesondere kann netzdienlich bereitgestellte Netzaustauschleistung dazu beitragen, die Amplitude und/oder Frequenz der Netzspannung innerhalb von vorgegebenen Toleranzbändern zu stabilisieren. Eine netzdienliche Bereitstellung von Netzaustauschleistung wird jedoch durch die in vorbekannten Gebäude-Energiesystemen nicht vorhersagbare Netzaustauschleistung praktisch unmöglich gemacht.

Weiterhin wird bei vorbekannten Gebäude-Energiesystemen das externe Stromnetz während der Tagstunden permanent belastet, d.h. es muss ständig von Null verschiedene Netzaustauschleistung bereitgestellt werden.
Die bei vorbekannten Gebäude-Energiesystemen auftretende, ungesteuerte und nicht vorhersagbare Netzaustauschleistung stellt damit aus Sicht des Netzbetreibers ein Problem, z.B. für die Netzstabilität, dar.
Zudem kann es auch aus wirtschaftlichen Erwägungen heraus wünschenswert sein, die Netzaustauschleistung zu minimieren, und beispielsweise die Eigenstromnutzung innerhalb des Gebäude-Energiesystems zu maximieren. Eine solche Eigenbedarfsoptimierung wird aber durch die in vorbekannten Gebäude-Energiesystemen nicht vorhersagbare Netzaustauschleistung deutlich erschwert. Zuletzt kann in vorbekannten Gebäude-Energiesystemen das Problem auftreten, dass aufgrund von geltenden Bestimmungen für die Einspeisung von Solarstrom in das externe Stromnetz nicht wünschenswerte Abregelungsverluste an den Photovoltaikmodulen in Kauf genommen werden müssen. Die EP2660954A1 zeigt ein Kontrolleinheit für ein Energiesystem.

### Zusammenfassung der Erfindung

Es ist daher Aufgabe der Erfindung, eine Kontrollvorrichtung für ein System, insbesondere Gebäude-Energiesystem, ein entsprechendes Steuerungsverfahren und ein Gebäude-Energiesystem bereitzustellen, die frei von den oben festgestellten Problemen im Stand der Technik sind. Es ist insbesondere Aufgabe der Erfindung, eine Kontrollvorrichtung, ein entsprechendes Steuerungsverfahren und ein Gebäude-Energiesystem bereitzustellen, die die Belastung des externen Stromnetzes verringern, die netzdienliche Bereitstellung von Netzaustauschleistung ermöglichen und das interne Energiemanagement verbessern.

Zur Lösung dieser Aufgabe werden erfindungsgemäß eine Kontrollvorrichtung, ein Steuerungsverfahren und ein Gebäude-Energiesystem mit den Merkmalen der unabhängigen Patentansprüche vorgeschlagen. Bevorzugte Ausführungsformen der Erfindung sind Gegenstand der abhängigen Patentansprüche.

Gemäß einem ersten Aspekt der Erfindung wird eine Kontrolleinheit für ein System mit einem Klimagerät, einer Photovoltaikanlage als Erzeugereinheit (Energieerzeugereinheit) zur Erzeugung von elektrischer Energie und einem Energiespeicher zum Speichern von elektrischer Energie, das mit einem Netzanschlusspunkt zur Einspeisung oder Aufnahme von elektrischer Energie in oder aus einem externen Stromnetz (z.B. Verteilnetz, Inselnetz oder Übertragungsnetz) in Verbindung steht, vorgeschlagen. Die Kontrolleinheit kann dazu ausgestaltet sein, das Klimagerät, die Erzeugereinheit und den Energiespeicher gemeinsam (d.h. einheitlich, übergreifend, übergeordnet) in Abhängigkeit von zumindest einer Bedingung für die mit der eingespeisten oder aufgenommenen elektrischen Energie (bzw. Leistung) assoziierten Stromstärke und/oder Spannung zu steuern. Die gemeinsame Steuerung des Klimageräts, der Photovoltaikanlage und des Energiespeichers beinhaltet dabei die Steuerung der von dem Klimagerät aufgenommenen Leistung, der von der Photovoltaikanlage abgegebenen Leistung, und der von dem Energiespeicher aufgenommenen oder abgegebenen Leistung. Bei dem System kann es sich um ein Gebäude-Energiesystem, beispielsweise um ein Gebäude-Energiesystem mit einem Leistungsbereich (elektrische Leistung) bis ca. 10 kW (z.B. für ein Einfamilienhaus) oder bis ca. 100kW (z.B. für ein Mehrfamilienhaus oder eine Gewerbeimmobilie) handeln. Bei dem Klimagerät kann es sich um eine Wärmepumpeneinheit oder eine Klimaanlage handeln, und das Klimagerät kann einen leistungsgesteuerten Verdichter umfassen.

Der Einsatz der vorgeschlagenen Kontrolleinheit ermöglicht durch die übergeordnete Steuerung bzw. Regelung der Komponenten des Gebäude-Energiesystems eine Abstimmung der Steuerung des Klimageräts, der Erzeugereinheit und des Energiespeichers, und damit eine Optimierung der Steuerung. Dies erlaubt insbesondere eine Optimierung der Leistungseinspeisung bzw. Leistungsaufnahme am Netzanschlusspunkt in einer Art und Weise, die bei getrennter Steuerung der Komponenten des Gebäude-Energiesystems nicht möglich wäre. Zudem sind durch die übergeordnete, gemeinsame Steuerung Einsparungen bei Hardwarekomponenten realisierbar, z.B. durch das Vorsehen gemeinsamer elektronischer Komponenten wie Wechselrichter (Inverter), Kondensatorbänken und sonstiger Leistungselektronik. Die Zeitkonstanten der verbleibenden proprietären elektronischen Komponenten der Komponenten des Gebäude-Energiesystems können aufeinander abgestimmt werden, so dass schnellere Regelschleifen realisiert werden können. Zuletzt ermöglicht die gemeinsame übergeordnete Steuerung der Komponenten des Gebäude-Energiesystems eine für den Nutzer intuitivere Bedienung des Gebäude-Energiesystems und dessen Komponenten.

Vorzugsweise ist die Kontrolleinheit dazu ausgestaltet, die zumindest eine Bedingung in Abhängigkeit von einer oder mehreren an dem Netzanschlusspunkt oder an einem anderen Punkt des externen Stromnetzes erfassten Messgrößen abzuleiten. Zusätzlich oder alternativ kann die Kontrolleinheit dazu ausgestaltet sein, die zumindest eine Bedingung in Abhängigkeit von einer Tageszeit und/oder einem vorbestimmten Zeitplan ("Energiefahrplan") für die Einspeisung oder Aufnahme von elektrischer Energie (bzw. Leistung) in oder aus dem externen Stromnetz abzuleiten. Die erfasste Messgröße kann dabei die Energieeinspeisung in das externe Stromnetz oder die Energieaufnahme aus dem externen Stromnetz betreffen.

Durch derartiges Ableiten der zumindest einen Bedingung kann ein gewünschtes Verhalten am Netzanschlusspunkt in einfacher und transparenter Weise dargestellt werden.

Bevorzugt ist die Kontrolleinheit dazu ausgestaltet, eine gemeinsame Puffereinheit (z.B. Kondensatorbank) zur Speicherung (z.B. Zwischenspeicherung) elektrischer Energie für das Klimagerät, die Erzeugereinheit und den Energiespeicher zu steuern. Ferner kann die Kontrolleinheit dazu ausgestaltet sein, einen gemeinsamen Wechselrichter (Inverter) für das Klimagerät, die Erzeugereinheit und den Energiespeicher zu steuern. Die Kontrolleinheit kann dabei die gemeinsame Puffereinheit und/oder den gemeinsamen Wechselrichter umfassen. Weitere Vorteile ergeben sich, wenn die Kontrolleinheit zusätzlich dazu ausgestaltet ist, eine gemeinsame Treiberschaltung für Halbleiterschalter, einen gemeinsamen Sinusfilter bzw. Leistungsfaktorkorrekturfilter (PFC), ein gemeinsames Bordnetz für die Spannungsversorgung und/oder ein gemeinsames Display zur Visualisierung zu steuern, bzw. eines oder mehrere der genannten Elemente umfasst.

Durch die oben beschriebene Ausgestaltung der Kontrolleinheit lassen sich Einsparungen bei Materialverbrauch und Kosten, sowie bei der Modulgröße der einzelnen Komponenten Gebäude-Energiesystems erzielen. Ein zusätzliches Einsparungspotential ergibt sich durch aufeinander abgestimmte Dimensionierung der elektronischen Komponenten des Gebäude-Energiesystems. Aufgrund der räumlichen Nähe der elektronischen Komponenten zueinander lässt sich zudem eine schnellere Steuerung bzw.

Regelung realisieren, und die Installation und Wartung der elektronischen Komponenten wird vereinfacht.

Es ist besonders vorteilhaft, wenn die Kontrolleinheit dazu ausgestaltet ist, das Klimagerät, die Erzeugereinheit und den Energiespeicher derart zu steuern, dass die Stromstärke und/oder Spannung am Netzanschlusspunkt ein vorbestimmtes Verhalten aufweisen.

Zusätzlich zur Eigenbedarfsoptimierung ermöglicht es diese Ausgestaltung, Dienstleistungen an das externe Stromnetz (z.B. Verteilnetz, Inselnetz, oder Übertragungsnetz) bereitzustellen. Diese Dienstleistungen können die Spannungshaltung, Frequenzhaltung, Korrektur von Blindleistung und Reaktion auf eine Demand Side Response (z.B. in Form einer Energieampel) betreffen. Zudem werden eine Reaktion auf ein Preissignal sowie das Aufstellen und Einhalten eines Zeitplans ("Fahrplan") für die Stromeinspeisung ermöglicht.

In Ausführungsformen der Erfindung kann die Kontrolleinheit dazu ausgestaltet sein, das Klimagerät, die Erzeugereinheit und den Energiespeicher derart zu steuern, dass die Energieeinspeisung in das externe Stromnetz auf null reduziert wird.

Entsprechend kann der Eigenverbrauch des Gebäude-Energiesystems optimiert, d.h. erhöht werden. Eine solche Eigenbedarfsoptimierung kann angezeigt sein, um Stromeinspeisung in das externe Stromnetz zu wirtschaftlich ungünstigen Konditionen zu vermeiden oder die Belastung des externen Stromnetzes zu verringern.

In Ausführungsformen kann die Kontrolleinheit weiterhin dazu ausgestaltet sein, durch geeignete Steuerung des Klimageräts, der Erzeugereinheit und des Energiespeichers die Stromeinspeisung zu wirtschaftlich günstigen Konditionen zu erhöhen bzw. zu maximieren.

In Ausführungsformen der Erfindung betrifft die erfasste Messgröße die Netzspannung. Die Kontrolleinheit ist dann bevorzugt dazu ausgestaltet, den gemeinsamen Wechselrichter in Abhängigkeit von der erfassten Messgröße zur Bereitstellung einer von der erfassten Messgröße abhängigen Blindleistung zu steuern.

Durch diese Ausgestaltung kann als Dienstleistung an das externe Stromnetz im Rahmen eines intelligenten Stromnetzes (Smart Grid) Blindleistung bereitgestellt werden, und damit die Blindleistung im externen Stromnetz (z.B. Verteilnetz) korrigiert werden.

In Ausführungsformen der Erfindung betrifft (z.B., ist) die erfasste Messgröße die Frequenz der Netzspannung. Die Kontrolleinheit ist dann bevorzugt dazu ausgestaltet, die Wirkleistung (d.h. Energie-/Leistungsabgabe an das externe Stromnetz bzw. Energie-/Leistungsaufnahme aus dem externen Stromnetz) des Klimageräts und/oder des Energiespeichers in Abhängigkeit von der erfassten Messgröße betreffend die Frequenz zu steuern und dadurch die Frequenz der Netzspannung (ggf. gemeinsam mit weiteren netzdienlich ausgestalteten Energiesystemen) zu beeinflussen. Dabei kann die Kontrolleinheit dazu ausgestaltet sein, das Klimagerät, die Erzeugereinheit und den Energiespeicher derart zu steuern, dass eine positive Regelleistung an das externe Stromnetz bereitgestellt wird, falls ein Ist-Wert der Frequenz der Netzspannung unterhalb eines Soll-Werts für die Frequenz der Netzspannung liegt, und eine negative Regelleistung an das externe Stromnetz bereitgestellt wird, falls der Ist-Wert der Frequenz der Netzspannung oberhalb des Soll-Werts für die Frequenz der Netzspannung liegt.

Durch diese Ausgestaltung kann als Dienstleistung an das externe Stromnetz im Rahmen eines intelligenten Stromnetzes Regelleistung bereitgestellt werden, und damit die Frequenz im externen Stromnetz (z.B. Inselnetz oder Verteilnetz) stabilisiert werden.

In Ausführungsformen der Erfindung kann das System zusätzlich einen Wärmeerzeuger umfassen. Dieser Wärmeerzeuger kann beispielsweise dazu ausgestaltet sein, Wärme durch Verbrennung eines Brennstoffs (z.B. eines fossilen Brennstoffs wie Öl oder Gas, oder z.B. Holzpellets) zu erzeugen. Die Kontrolleinheit kann dann dazu ausgestaltet sein, zusätzlich die von dem Wärmeerzeuger erzeugte Wärmemenge (Heizleistung) zu steuern bzw. regeln. Ein besonderer Vorteil ergibt sich, wenn die Kontrolleinheit dazu ausgestaltet ist, die von dem Wärmeerzeuger erzeugte Wärmemenge in Abhängigkeit von einem Istwert und einem Sollwert für die Energieaufnahme des Klimageräts zu steuern. Der Sollwert für die Energieaufnahme des Klimageräts ergibt sich dabei aus der gemeinsamen Steuerung des Klimageräts, der Photovoltaikanlage und des Energiespeichers. Weiterhin kann die Kontrolleinheit die Energieaufnahme des Klimageräts derart steuern, dass sie mit dem Sollwert übereinstimmt. Handelt es sich beispielsweise bei dem Klimagerät um eine Wärmepumpe im Heizbetrieb, kann die von dem Wärmeerzeuger erzeugte Wärmemenge vergrößert werden, um gleichzeitig die Energieaufnahme (und damit Heizleistung) der Wärmepumpe zu reduzieren. Umgekehrt kann die von dem Wärmeerzeuger erzeugte Wärmemenge verringert werden, um gleichzeitig die Energieaufnahme (und damit Heizleistung) der Wärmepumpe zu erhöhen. Alternativ kann die Wärmepumpe für den Kühlbetrieb genutzt werden.

Mit anderen Worten können durch die obige gemeinsame Steuerung der Strombedarf (Leistungsbedarf) und der Wärmebedarf aufeinander abgestimmt werden. Ein gewünschtes Einspeiseverhalten am Netzanschlusspunkt kann so ohne Komforteinbußen realisiert werden.

In Ausführungsformen der Erfindung umfasst das Klimagerät einen Wechselrichter (Inverter) und die Kontrolleinheit ist dazu ausgestaltet, den Wechselrichter des Klimageräts zu steuern. Zusätzlich oder alternativ kann die Erzeugereinheit ein Photovoltaikmodul mit einem Wechselrichter umfassen und die Kontrolleinheit dazu ausgestaltet sein, den Wechselrichter der Erzeugereinheit zu steuern. Zusätzlich oder alternativ kann der Energiespeicher einen Akkumulator (z.B. Lithium-Ionen-Akkumulator) mit einem Laderegler umfassen und die Kontrolleinheit dazu ausgestaltet sein, den Laderegler zu steuern.

Gemäß einem weiteren Aspekt der Erfindung wird ein Gebäude-Energiesystem vorgeschlagen, das mit einem Netzanschlusspunkt zur Einspeisung oder Aufnahme vom elektrischer Energie an oder von einem externen Stromnetz verbindbar ist und das ein Klimagerät, eine Erzeugereinheit zur Erzeugung von elektrischer Energie, einen Energiespeicher zum Speichern von elektrischer Energie und die Kontrolleinheit gemäß dem vorhergehenden Aspekt der Erfindung oder dessen Ausgestaltungen umfasst.

Das Gebäude-Energiesystem kann zusätzlich einen Wärmeerzeuger umfassen. Dieser Wärmeerzeuger kann beispielsweise dazu ausgestaltet sein, Wärme durch Verbrennung eines Brennstoffs (z.B. fossiler Brennstoff wie Öl oder Gas, oder z.B. Holzpellets) zu erzeugen. Die Kontrolleinheit kann dann dazu ausgestaltet sein, die von dem Wärmeerzeuger erzeugte Wärmemenge zu steuern.

Gemäß einem weiteren Aspekt der Erfindung wird ein Verfahren zur Steuerung eines Systems mit einem Klimagerät, einer Photovoltaikanlage als Erzeugereinheit zur Erzeugung von elektrischer Energie und einem Energiespeicher zum Speichern von elektrischer Energie, das mit einem Netzanschlusspunkt zur Einspeisung oder Aufnahme von elektrischer Energie in oder aus einem externen Stromnetz in Verbindung steht, vorgeschlagen. Das Verfahren kann dabei das gemeinsame Steuern des Klimageräts, der Erzeugereinheit und des Energiespeichers in Abhängigkeit von zumindest einer Bedingung für die mit der eingespeisten oder aufgenommenen elektrischen Energie assoziierten Stromstärke und/oder Spannung umfassen. Die gemeinsame Steuerung des Klimageräts, der Photovoltaikanlage und des Energiespeichers beinhaltet dabei die Steuerung der von dem Klimagerät aufgenommenen Leistung, der von der Photovoltaikanlage abgegebenen Leistung, und der von dem Energiespeicher aufgenommenen oder abgegebenen Leistung.

Bevorzugt umfasst das Verfahren die weiteren Schritte: Empfangen einer oder mehrerer an dem Netzanschlusspunkt oder einem anderen Punkt des externen Stromnetzes erfasster Messgrößen und Ableiten der zumindest einen Bedingung in Abhängigkeit von den empfangenen Messgrößen. Zusätzlich oder alternativ kann das Verfahren das Ableiten der zumindest einen Bedingung in Abhängigkeit von einer Tageszeit und/oder einem vorbestimmten Zeitplan für die Einspeisung oder Aufnahme von elektrischer Energie in oder aus dem externen Stromnetz umfassen.

In einer bevorzugten Ausführungsform kann die Steuerung des Klimageräts, der Erzeugereinheit und des Energiespeichers derart erfolgen, dass die Stromstärke und/oder Netzspannung am Netzanschlusspunkt ein vorbestimmtes Verhalten aufweisen. Ein besonderer Vorteil ergibt sich, wenn die Steuerung derart erfolgt, dass die Energieeinspeisung in das externe Stromnetz auf null reduziert wird.

In Ausführungsformen der Erfindung betrifft (z.B., ist) die empfangene Messgröße die Frequenz der Netzspannung. In diesem Fall weist das Verfahren bevorzugt den weiteren Schritt Steuern der Wirkleistung (d.h. Energie-/Leistungsabgabe an das externe Stromnetz bzw. Energie-/Leistungsaufnahme aus dem externen Stromnetz) des Klimageräts und/oder des Energiespeichers in Abhängigkeit von der empfangenen Messgröße betreffend die Frequenz auf.

In Ausführungsformen der Erfindung betrifft (z.B., ist) die empfangene Messgröße die Frequenz der Netzspannung. In diesem Fall erfolgt die Steuerung des Klimageräts, der Erzeugereinheit und des Energiespeichers bevorzugt derart, dass eine positive Regelleistung an das externe Stromnetz bereitgestellt wird, falls ein Ist-Wert der Frequenz der Netzspannung unterhalb eines Soll-Werts für die Frequenz der Netzspannung liegt, und eine negative Regelleistung an das externe Stromnetz bereitgestellt wird, falls der Ist-Wert der Frequenz der Netzspannung oberhalb des Soll-Werts für die Frequenz der Netzspannung liegt.

In Ausführungsformen der Erfindung kann das System zusätzlich einen Wärmeerzeuger umfassen. In diesem Fall ist es vorteilhaft, wenn das Verfahren den weiteren Schritt Steuern der von dem Wärmeerzeuger erzeugten Wärmemenge aufweist. Insbesondere kann die Steuerung der von dem Wärmeerzeuger erzeugten Wärmemenge in Abhängigkeit von einem Istwert und einem Sollwert für die Energieaufnahme des Klimageräts erfolgen. Der Sollwert für die Energieaufnahme des Klimageräts ergibt sich dabei aus der gemeinsamen Steuerung des Klimageräts, der Photovoltaikanlage und des Energiespeichers.

### Kurze Beschreibung der Zeichnung

Weitere vorteilhafte Ausgestaltungen, auf die jedoch die Erfindung in ihrem Umfang nicht beschränkt ist, ergeben sich aus der folgenden Beschreibung anhand der Zeichnung. Identische Elemente sind dabei in den Figuren mit identischen Bezugszeichen versehen, und es wird auf Wiederholung der Beschreibung bereits beschriebener Elemente verzichtet. Es zeigen im Einzelnen:
**Figur 1** eine beispielhafte schematische Darstellung eines Gebäude-Energiesystems mit einer Energieerzeugereinheit,
**Figur 2** eine beispielhafte schematische Darstellung eines Gebäude-Energiesystems mit einer Energieerzeugereinheit und einem Energiespeicher,
**Figur 3** eine beispielhafte schematische Darstellung eines Gebäude-Energiesystems mit einer Energieerzeugereinheit, einem Energiespeicher, und einem Klimagerät,
**Figur 4** eine beispielhafte schematische Darstellung eines Gebäude-Energiesystems gemäß Ausführungsformen der Erfindung,
**Figur 5** eine weitere beispielhafte schematische Darstellung des Gebäude-Energiesystems in **Figur 4**,
**Figur 6** eine beispielhafte schematische Darstellung eines Gebäude-Energiesystems gemäß weiteren Ausführungsformen der Erfindung, und
**Figur 7** eine weitere beispielhafte schematische Darstellung des Gebäude-Energiesystems in **Figur 6**.

### Ausführliche Beschreibung der Erfindung

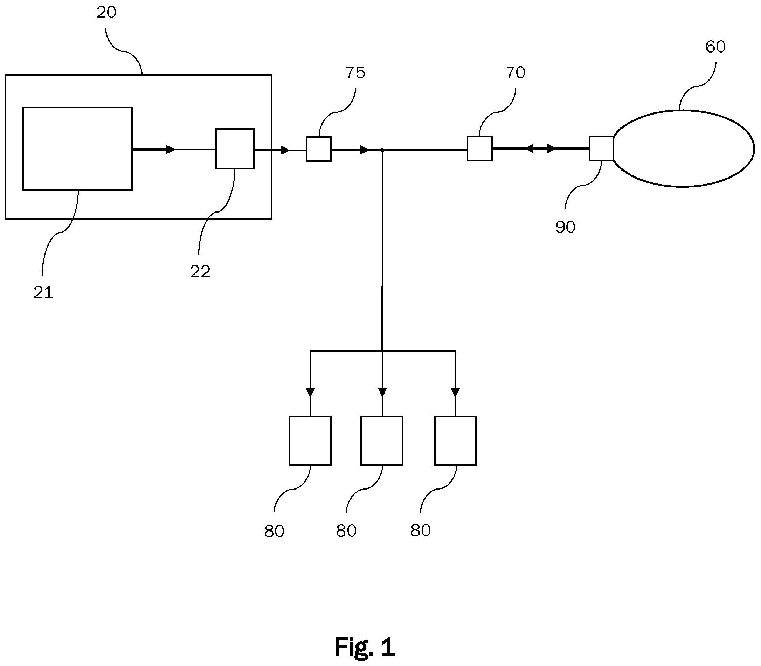

**Figur 1** zeigt ein Gebäude-Energiesystem (allgemein: System) mit einer Energieerzeugereinheit 20 zur Erzeugung elektrischer Energie. Bei der Energieerzeugereinheit 20 kann es sich um eine Photovoltaikanlage mit einem Photovoltaikmodul 21 und einem Wechselrichter (Inverter) 22, sowie ggf. weiterer Leistungselektronik, handeln. Die Energieerzeugereinheit 20 ist (ggf. über einen Stromzähler 75, z.B. Solarstromzähler und ggf. über einen Einspeise- und Bezugszähler 70) mit einem Netzanschlusspunkt (Netzübergabepunkt) 90 verbunden, der wiederum mit einem externen Stromnetz 60 in Verbindung steht. Zusätzlich sind die Energieerzeugereinheit 20 und der Netzanschlusspunkt 90 über ein internes Stromnetz mit einem oder mehreren elektrischen Verbrauchern 80 verbunden. Die möglichen Richtungen des Stromflusses (d.h. die Richtung der Energieübertragung) sind dabei über kleine Pfeile an den jeweiligen Verbindungslinien zwischen den genannten Komponenten des Gebäude-Energiesystems verdeutlicht.

In dem in **Figur 1** gezeigten Gebäude-Energiesystem können die eingangs beschriebenen Probleme hinsichtlich Belastung des externen Stromnetzes 60 und Abregelungsverlusten an der Energieerzeugereinheit 20 auftreten.

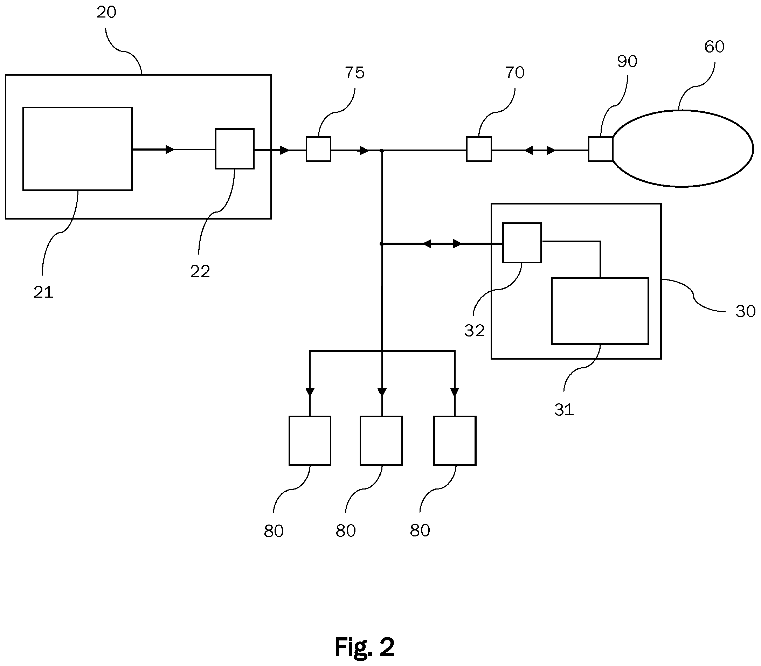

Eine erste Verbesserung kann durch das in **Figur 2** gezeigte Gebäude-Energiesystem erzielt werden. Dieses umfasst zusätzlich zu den oben genannten Komponenten einen Energiespeicher 30 zum Speichern elektrischer Energie, der einen Wechselrichter 32, einen Laderegler und einen Akkumulator (Batterie) 31, sowie ggf. weitere Leistungselektronik beinhalten kann. Durch geeignete Energieaufnahme (Leistungsaufnahme) bzw. Energieabgabe (Leistungsabgabe) durch den Energiespeicher 30 im Falle von Überschuss bzw. Mangel an von der Energieerzeugereinheit 20 bereitgestellter elektrischer Leistung kann die Netzaustauschleistung reduziert werden. Der Umfang der möglichen Reduktion der Netzaustauschleitung steht hier jedoch in engem Zusammenhang zur (begrenzten) Kapazität des Energiespeichers (d.h. Akkumulators 31), so dass die Vorteile verbesserter Reduktion der Netzaustauschleistung gegen den Nachteil höherer Anschaffungskosten für den Energiespeicher abzuwägen sind.

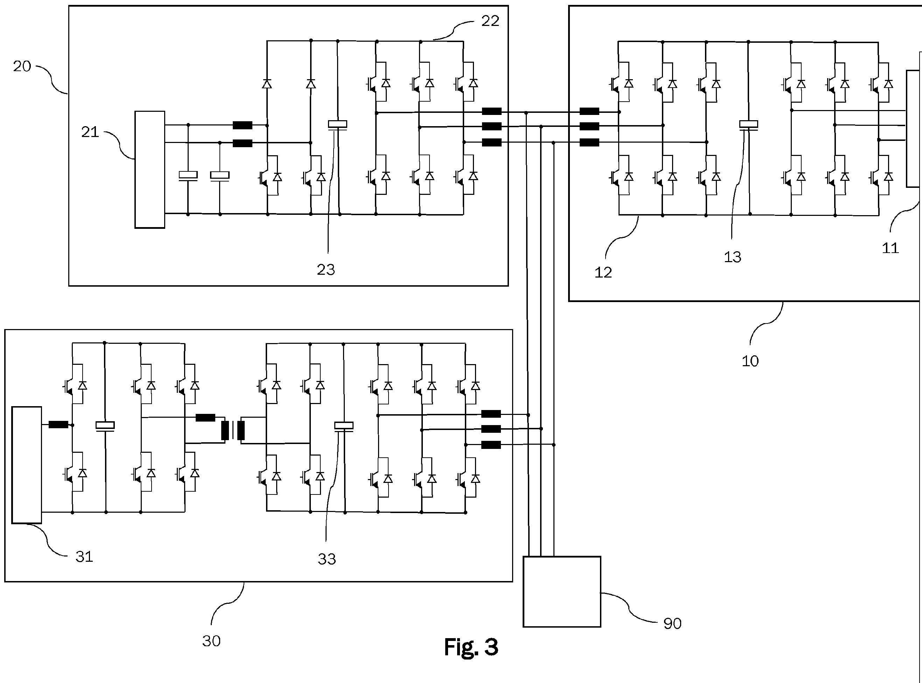

Die **Figur 3** zeigt schematisch ein weiteres Beispiel eines Gebäude-Energiesystems. Diese umfasst zusätzlich zur Energieerzeugereinheit 20 und dem Energiespeicher 30 ein Klimagerät 10. Die Energieerzeugereinheit 20 kann zusätzlich zu den oben genannten Komponenten einen Energiezwischenspeicher (Puffereinheit) 23 umfassen, bei dem es sich beispielsweise um eine Kondensatorbank handeln kann. Der Energiespeicher 30 kann ebenfalls einen Energiezwischenspeicher 33 umfassen. Das Klimagerät 10 kann einen (leistungsgesteuerten, d.h. drehzahlgesteuerten) Verdichter 11, sowie einen Wechselrichter 12 und einen Energiezwischenspeicher 13 umfassen. Bei dem Klimagerät 10 kann es sich beispielsweise um eine Wärmepumpeneinheit oder eine Klimaanlage handeln.

Die Energieerzeugereinheit 20, der Energiespeicher 30 und das Klimagerät 10 sind jeweils mit dem Netzanschlusspunkt 90 verbunden und können Energie (Leistung) an diesen abgeben (Energieerzeugereinheit 20 und Energiespeicher 30) oder Energie (Leistung) von diesem aufnehmen (Klimagerät 10 und Energiespeicher 30). Auch bei diesem Gebäude-Energiesystem können jedoch die oben geschilderten Probleme auftreten.

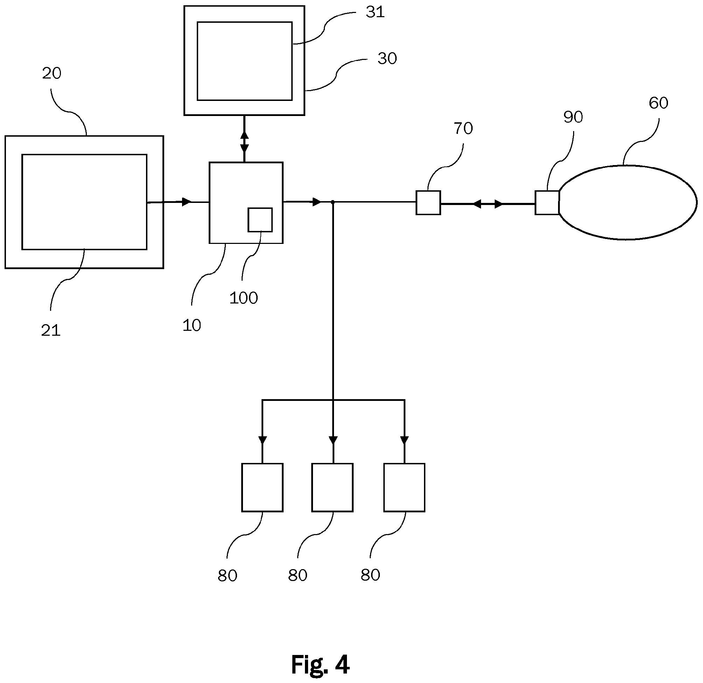

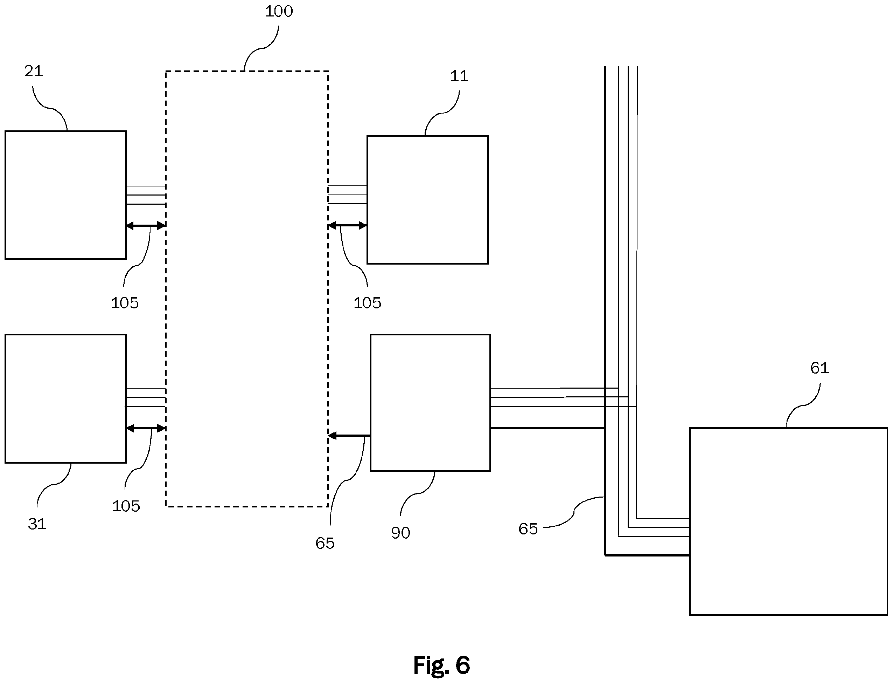

Die **Figur 4** zeigt ein Gebäude-Energiesystem gemäß Ausführungsformen der Erfindung. Das Gebäude-Energiesystem umfasst eine Energieerzeugereinheit 20, einen Energiespeicher 30 und ein Klimagerät 10. Soweit nicht anders angegeben, können die Energieerzeugereinheit 20, der Energiespeicher 30 und das Klimagerät 10 die jeweils oben genannten im Zusammenhang mit den **Figuren 1** bis **3** genannten elektronischen Komponenten umfassen. Das Gebäude-Energiesystem ist mit dem Netzanschlusspunkt 90, und über diesen mit dem externen Stromnetz 60 verbunden und kann elektrische Energie (bzw. Leistung) von dem externen Stromnetz 60 aufnehmen oder an dieses abgeben. Das Gebäude-Energiesystem umfasst ferner eine Kontrolleinheit 100 für das Gebäude-Energiesystem, die als Teil des Klimageräts 10, aber auch getrennt von diesem ausgebildet sein kann. Die Kontrolleinheit 100 steht mit dem Klimagerät 10, der Energieerzeugereinheit 20, und dem Energiespeicher 30 derart in Verbindung, beispielsweise über einen Datenbus 105 (siehe **Figur 6**), dass die Kontrolleinheit 100 das Klimagerät 10, die Energieerzeugereinheit 20 und den Energiespeicher 30 (d.h. deren Betrieb) steuern bzw. kontrollieren kann. Wie in **Figur 4** gezeigt, können die Energieerzeugereinheit 20 und der Energiespeicher 30 über das Klimagerät 10 mit dem Netzanschlusspunkt 90 verbunden sein, d.h. das Klimagerät 10 kann als zentrales Element (zentrales Smart-Grid-Element) des Gebäude-Energiesystems ausgebildet sein.

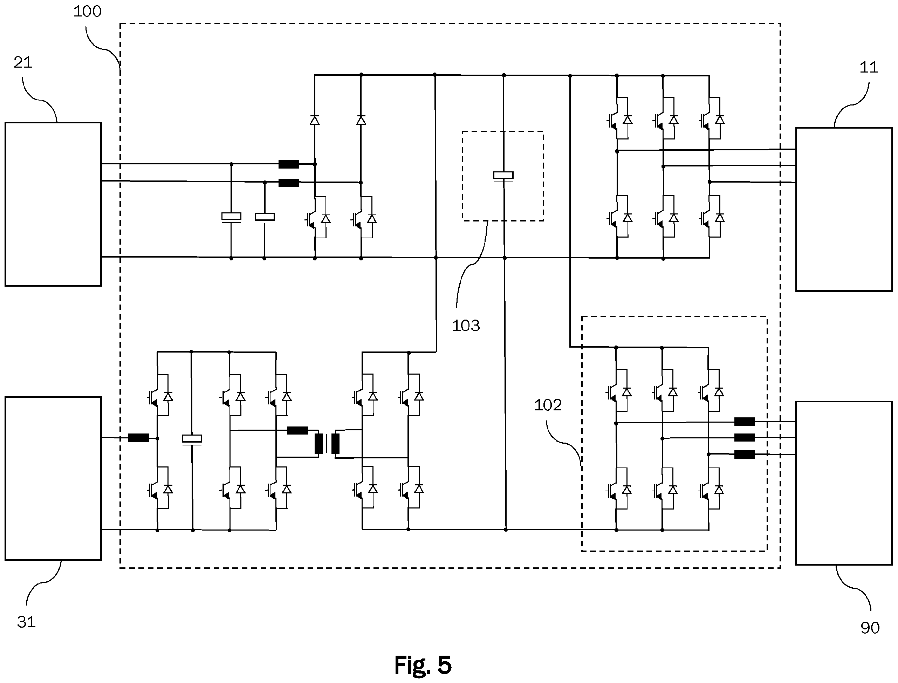

Wie oben ausgeführt, können die Energieerzeugereinheit 20, der Energiespeicher 30 und das Klimagerät 10 jeweils einen Energiezwischenspeicher und/oder einen Wechselrichter umfassen. Erfindungsgemäß kann jedoch die Kontrolleinheit 100 einen gemeinsamen Energiezwischenspeicher (Puffereinheit) 103, wie z.B. eine Kondensatorbank, und/oder gemeinsamen Wechselrichter (Inverter) 102 für die Energieerzeugereinheit 20, den Energiespeicher 30 und das Klimagerät 10 umfassen, bzw. zumindest mit diesen jeweils in Verbindung stehen und zu deren Steuerung ausgestaltet sein. Erstere Situation ist in **Figur 5** gezeigt. Daneben kann die Kontrolleinheit 100 weitere gemeinsame Leistungselektronikkomponenten für die Energieerzeugereinheit 20, den Energiespeicher 30 und das Klimagerät 10 umfassen bzw. zumindest mit diesen jeweils in Verbindung stehen und zu deren Steuerung ausgestaltet sein.

Zusätzlich zu Klimagerät 10, Energieerzeugereinheit 20 und Energiespeicher 30 kann das Gebäude-Energiesystem in Ausführungsformen der Erfindung einen Wärmeerzeuger (z.B. Brenner, oder Wärmepumpe) 15 umfassen. Beispielsweise kann der Wärmeerzeuger dazu ausgestaltet sein, Wärme durch Verbrennung eines Brennstoffs zu erzeugen. Bei dem Brennstoff kann es sich um einen fossilen Brennstoff, z.B. Öl oder Gas, oder auch um Holzpellets handeln. Der Wärmeerzeuger 15 kann mit dem Klimagerät 10 verbunden sein. Die Kontrolleinheit 100 steht mit dem Wärmeerzeuger 15 derart in Verbindung, beispielsweise über einen internen Datenbus 105 (siehe **Figur 6**), dass die Kontrolleinheit 100 den Wärmeerzeuger 15 (d.h. dessen Betrieb, insbesondere die erzeugte Wärmemenge bzw. Heizleistung) steuern bzw. kontrollieren kann. Ein Gebäude-Energiesystem mit einem Klimagerät 10, einem Wärmeerzeuger 15, einer Energieerzeugereinheit 20 und einem Energiespeicher 30 ist in **Figur 6** dargestellt.

Die Kontrolleinheit 100 ist dazu ausgestaltet, das Klimagerät 10, die Energieerzeugereinheit 20, den Energiespeicher 30 und ggf. den Wärmeerzeuger 15 gemeinsam (d.h. einheitlich bzw. aufeinander abgestimmt) in Abhängigkeit von zumindest einer Bedingung für die Stromstärke und/oder die Spannung, die mit der an dem Netzanschlusspunkt 90 eingespeisten oder von diesem aufgenommenen elektrischen Energie (in Form von Strom) assoziiert sind, zu steuern bzw. zu kontrollieren oder regeln. Mit anderen Worten steuert die Kontrolleinheit 10 das Klimagerät 10, die Energieerzeugereinheit 20, den Energiespeicher 30 und ggf. den Wärmeerzeuger 15 so, dass die Stromstärke und/oder Spannung am Netzanschlusspunkt 90 die zumindest eine Bedingung erfüllen, d.h. ein gewünschtes (vorbestimmtes) Verhalten aufweisen. Dabei steuert die Kontrolleinheit 100 beispielsweise die von dem Klimagerät 10 aufgenommene Leistung, die von der Energieerzeugereinheit 20 abgegebene Leistung und/oder die von dem Energiespeicher 30 aufgenommene oder abgegebene Leistung, und/oder ggf. die von dem Wärmeerzeuger 15 erzeugte Wärmemenge (Heizleistung).

Die vom Wärmeerzeuger 15 erzeugte Wärmemenge (Heizleistung) kann gemäß obiger gemeinsamer Steuerung in Abhängigkeit von einem Ist-Wert und einem Soll-Wert für die Leistungsaufnahme des Klimageräts 10 gesteuert werden. Liegt beispielsweise die Ist-Leistungsaufnahme des Klimageräts 10 oberhalb der Soll-Leistungsaufnahme, kann die Heizleistung des Wärmeerzeugers 15 erhöht werden, um die bei Verringern der Leistungsaufnahme des Klimageräts 10 auftretende Reduktion der Heizleistung des Klimageräts 10 zu kompensieren. Liegt umgekehrt die Ist-Leistungsaufnahme des Klimageräts 10 unterhalb der Soll-Leistungsaufnahme, kann die Heizleistung des Wärmeerzeugers 15 verringert werden, um den bei Erhöhen der Leistungsaufnahme des Klimageräts 10 auftretenden Anstieg der Heizleistung des Klimagerät 10 zu kompensieren. Entsprechend kann das Klimagerät 10 so gesteuert werden, dass seine Ist-Leistungsaufnahme der Soll-Leistungsaufnahme entspricht. Mit anderen Worten können durch die obige gemeinsame Steuerung der Strombedarf (Leistungsbedarf) und der Wärmebedarf aufeinander abgestimmt, und so Komforteinbußen vermieden werden.

Wie oben ausgeführt, kann das Klimagerät 10 einen leistungsgeregelten Verdichter 11 und einen Wechselrichter (Inverter) 12, sowie ggf. weitere Leistungselektronik umfassen. Die Steuerung des Klimagerät 10 durch die Kontrolleinheit 100 kann dann durch Steuerung des Verdichters 11 (bzw. über dessen Drehzahl) und/oder des Wechselrichters 12 erfolgen. Die Energieerzeugereinheit 20 kann ein Photovoltaikmodul 21 und einen Wechselrichter (Inverter) 22, sowie ggf. weitere Leistungselektronik umfassen. Die Steuerung der Energieerzeugereinheit 20 kann durch Steuerung des Wechselrichters 22 und/oder der Leistungselektronik erfolgen. Beispielsweise können Untermodule des Photovoltaikmoduls 21 vorübergehend vom Stromkreis der Energieerzeugereinheit 20 getrennt werden, um vorübergehend die von der Energieerzeugereinheit 20 abgegebene Leistung zu reduzieren. Der Energiespeicher 30 kann einen Wechselrichter (Inverter) 32, einen Laderegler und einen Akkumulator 31, sowie ggf. weitere Leistungselektronik umfassen. Die Steuerung des Energiespeichers 30 kann durch Steuerung des Ladereglers und/oder des Wechselrichters 32 erfolgen.

Wie oben ausgeführt, ist die Kontrolleinheit 100 dazu ausgestaltet, das Klimagerät 10, die Energieerzeugereinheit 20, den Energiespeicher 30 und ggf. den Wärmeerzeuger 15 gemeinsam in Abhängigkeit von zumindest einer Bedingung für die Stromstärke und/oder die Spannung am Netzanschlusspunkt 90 zu steuern. Gemäß einer möglichen ersten Bedingung wird die Energieabgabe (Leistungsabgabe) an das externe Stromnetz 60 so weit wie möglich, idealerweise auf null reduziert, d.h. die Netzaustauschleistung wird auf null oder einen negativen Wert (Leistungsaufnahme aus dem externen Stromnetz 60) geregelt. Das Erfüllen dieser ersten Bedingung führt zu einer Steigerung bzw. Maximierung des Eigennutzens (Eigenverbrauchs). Eine derartige Steuerung durch die Kontrolleinheit 100 kann insbesondere um die Mittagszeit von Vorteil sein, da zur Mittagszeit typischerweise das größte Angebot an Solarstrom besteht.

Zur Erfüllung der ersten Bedingung kann der Energiespeicher 30 derart gesteuert werden, dass Leistung aufgenommen wird, d.h. der Energiespeicher 30 bzw. Akkumulator 31 aufgeladen wird. Das Klimagerät 10 kann derart gesteuert werden, dass seine Leistungsaufnahme erhöht wird. Bei Betrieb des Klimageräts 10 als Heizgerät kann die aufgrund der Erhöhung der Leistungsaufnahme des Klimageräts 10 zusätzlich anfallende Heizleistung durch Absenken der Heizleistung des Wärmeerzeugers 15 kompensiert werden. Durch die vorgenannte gemeinsame Steuerung des Klimageräts 10, Energiespeichers 30 und ggf. Wärmeerzeugers 15 kann die erste Bedingung eingehalten, und unter Umständen gleichzeitig eine Abregelung der Energieerzeugereinheit 20 vermieden werden, d.h. die Energieerzeugereinheit 20 kann gleichzeitig derart gesteuert werden, dass ihre Leistungsabgabe maximal ist. Erst wenn trotz der vorgenannten gemeinsamen Steuerung die erste Bedingung nicht eingehalten werden kann, muss eine Abregelung der Leistungsabgabe der Energieerzeugereinheit 20 erfolgen.

Die Kontrolleinheit 100 kann dazu ausgestaltet sein, die zumindest eine Bedingung an die Stromstärke und/oder Spannung in Reaktion auf ein Signal vom Netzbetreiber des externen Stromnetzes 60 zu bestimmen. Dieses Signal kann beispielsweise über eine vom Netzbetreiber bereitgestellte Datenverbindung (externer Datenbus) 65 erfolgen. Eine mögliche zweite Bedingung, die in Reaktion auf ein Signal vom Netzbetreiber bestimmt wird, betrifft allgemein die Leistungseinspeisung bzw. Leistungsaufnahme am Netzanschlusspunkt 90. Im Folgenden werden Beispiele für die zweite Bedingung beschrieben.

Beispielsweise kann die zweite Bedingung entsprechend einer Laststeuerung (Demand Side Response), die durch den Netzbetreiber erfolgt, bestimmt bzw. abgeleitet werden. Die Laststeuerung kann die Übermittlung eines "Ampelsignals" betreffend eine vom Netzbetreiber gewünschte Einspeisung in das externe Stromnetz 60 beinhalten. Die Kontrolleinheit 100 kann dazu ausgestaltet sein, das Klimagerät 10, die Energieerzeugereinheit 20 und den Energiespeicher 30 derart gemeinsam zu steuern, dass die vom Netzbetreiber gewünschte Einspeisung realisiert wird, d.h. die zweite Bedingung betrifft eine gewünschte Leistungseinspeisung am Netzanschlusspunkt 90. Bevorzugt erfolgt die gemeinsame Steuerung dabei so, dass Abregelungsverluste der Energieerzeugereinheit 20 vermieden werden. Änderungen in der Heizleistung des Klimageräts 10 aufgrund von durch die gemeinsame Steuerung geänderter Leistungsaufnahme des Klimageräts 10 können durch entsprechende Steuerung der Heizleistung des Wärmeerzeugers 15 kompensiert werden, wie oben beschrieben.

Alternativ oder zusätzlich kann die zweite Bedingung in Abhängigkeit von einem Preissignal bestimmt bzw. abgeleitet werden. Die Kontrolleinheit 100 kann beispielsweise dazu ausgestaltet sein, das Klimagerät 10, die Energieerzeugereinheit 20 und den Energiespeicher 30 derart gemeinsam zu steuern, dass bei durch das Preissignal angezeigtem niedrigem Strompreis die Einspeisung in das externe Stromnetz 60 so weit wie möglich reduziert wird, bei durch das Preissignal angezeigtem hohem Strompreis hingegen so weit wie möglich erhöht wird. Auch in diesem Fall betrifft die zweite Bedingung eine gewünschte Leistungseinspeisung bzw. Leistungsaufnahme am Netzanschlusspunkt 90.

Eine Reduzierung der Einspeisung kann dabei durch Erhöhung der Leistungsaufnahme des Energiespeichers 30 und des Klimageräts erreicht werden. Eine Erhöhung der Einspeisung kann durch Verringerung der Leistungsaufnahme des Energiespeichers 30 und des Klimageräts erreicht werden, bzw. durch eine Erhöhung der Leistungsabgabe des Energiespeichers 30 sowie ggf. durch eine Erhöhung der Leistungsabgabe der Energieerzeugereinheit 20. Bevorzugt erfolgt auch hier die gemeinsame Steuerung so, dass Abregelungsverluste der Energieerzeugereinheit 20 vermieden werden. Änderungen in der Heizleistung des Klimageräts 10 aufgrund von durch die gemeinsame Steuerung geänderter Leistungsaufnahme des Klimageräts 10 können durch entsprechende Steuerung der Heizleistung des Wärmeerzeugers 15 kompensiert werden, wie oben beschrieben.

Die oben beschriebenen Maßnahmen stellen eine Dienstleitung an das Übertragungsnetz (als Beispiel für das externe Stromnetz 60) im Rahmen eines intelligenten Stromnetzes (Smart Grid) dar.

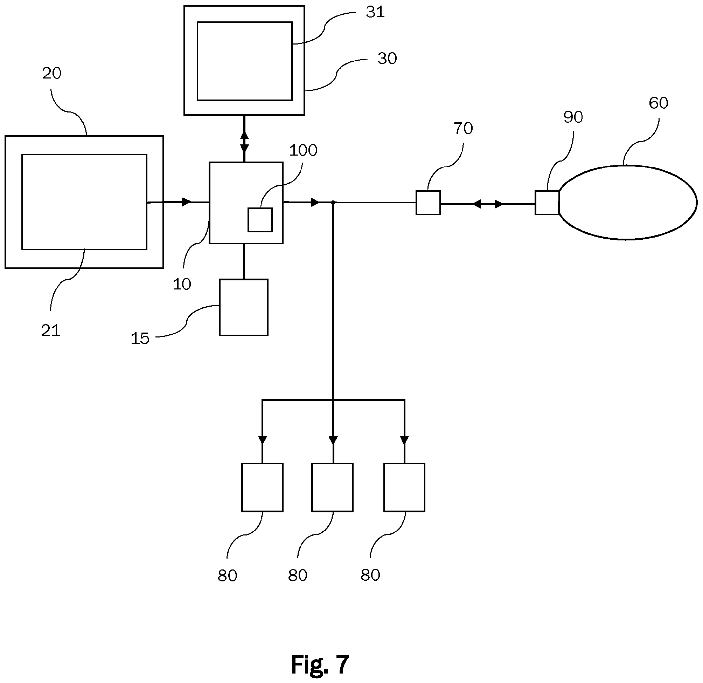

Die **Figur 7** zeigt schematisch das Gebäude-Energiesystem aus **Figur 6**, bei dem die Kontrolleinheit 100 Daten über den externen Datenbus 65 vom Netzbetreiber 61 empfangen kann. Weiterhin ist ein interner Datenbus 105 gezeigt, der die Kontrolleinheit 100 mit dem Klimagerät 10, dem Wärmeerzeuger 15, der Energieerzeugereinheit 20, dem Energiespeicher 30 und ggf. dem Wärmeerzeuger 15 (hier nicht gezeigt) verbindet.

Die zumindest eine Bedingung an die Stromstärke und/oder Spannung kann in Abhängigkeit von einer oder mehreren Messgrößen abgeleitet werden. Diese Messgrößen können am Netzanschlusspunkt 90 erfasst werden, oder aber an einem anderen Punkt des externen Stromnetzes 60. In letzterem Fall ist eine Datenübertragung der Messgrößen an das Gebäude-Energiesystem, beispielsweise über die vom Netzbetreiber bereitgestellte Datenverbindung (externer Datenbus) 65, erforderlich. Entsprechend kann die Kontrolleinheit 100 dazu ausgestaltet sein, die erfassten Messgrößen zu empfangen und zu verarbeiten.

In Ausführungsformen der Erfindung betreffen die eine oder mehreren erfassten Messgrößen die Energieeinspeisung in das externe Stromnetz 60 bzw. die Energieaufnahme aus dem externen Stromnetz 60.

Beispielsweise kann die Messgröße die Netzspannung des externen Stromnetzes 60 (z.B. Verteilungsnetz) betreffen. Eine mögliche dritte Bedingung für die Stromstärke und/oder die Spannung am Netzanschlusspunkt 90 kann in diesem Fall eine gewünschte Phasenbeziehung zwischen der Spannung und der Stromstärke (bzw. zwischen den komplexen Spannungs- und Stromstärkevektoren) betreffen. Die gewünschte Phasenbeziehung kann dabei aus der Netzspannung abgeleitet werden. Abhängig von der am Netzanschlusspunkt 90 hergestellten Phasenbeziehung wird (positive oder negative) Blindleistung an das externe Stromnetz 60 bereitgestellt. Die Kontrolleinheit 100 kann also dazu ausgestaltet sein, das Klimagerät 10, die Energieerzeugereinheit 20 und den Energiespeicher 30 derart zu steuern, dass eine gewünschte Phasenbeziehung zwischen der Spannung und der Stromstärke am Netzanschlusspunkt 90 vorliegt, d.h. Blindleistung an das externe Stromnetz 60 bereitgestellt wird. Insbesondere kann die Kontrolleinheit 100 dazu ausgestaltet sein, den gemeinsamen Wechselrichter 102 derart zu steuern, dass eine gewünschte Phasenbeziehung zwischen der Spannung und der Stromstärke am Netzanschlusspunkt 90 vorliegt, d.h. dass die dritte Bedingung erfüllt wird.

Die Phasenbeziehung bzw. bereitgestellte Blindleistung hängt dabei bevorzugt von der erfassten Messgröße (Netzspannung) ab. Übersteigt nämlich die erfasste Netzspannung ihren Soll-Wert, muss (positive) Blindleistung an das externe Stromnetz 60 zur Spannungshaltung bereitgestellt werden. Der gewünschte Phasenwinkel zwischen Spannung und Stromstärke am Netzanschlusspunkt 90 kann also von der erfassten Netzspannung, genauer von der Differenz zwischen der erfassten Netzspannung und ihrem Soll-Wert, abhängen.

Die vorgenannten Maßnahmen dienen der Spannungshaltung am Netzanschlusspunkt 90 innerhalb eines Toleranzbands, stellen also eine Dienstleistung an das Verteilnetz (als Bespiel des externen Stromnetzes 60) im Rahmen eines intelligenten Stromnetzes dar. Als weitere Dienstleistung an das Verteilnetz kann durch geeignete Wahl der gewünschten Phasenbeziehung die Blindleistung im Verteilnetz korrigiert werden.

Ferner kann die erfasste Messgröße die Frequenz der Netzspannung im externen Stromnetz 60 (z.B. Inselnetz oder Verteilnetz) betreffen. Eine mögliche vierte Bedingung für die Stromstärke und/oder die Spannung am Netzanschlusspunkt 90 kann in diesem Fall eine gewünschte Leistung (Wirkleistung) betreffen, die am Netzanschlusspunkt 90 in das externe Stromnetz 60 eingespeist wird. Die gewünschte Leistung (Wirkleistung) kann dabei aus der Frequenz der Netzspannung abgeleitet werden. Die Kontrolleinheit 100 kann also dazu ausgestaltet sein, das Klimagerät 10, die Energieerzeugereinheit 20 und den Energiespeicher 30 derart zu steuern, dass eine gewünschte Wirkleistung am Netzanschlusspunkt 90 vorliegt. Die Wirkleistung hängt dabei bevorzugt von der erfassten Messgröße (Frequenz der Netzspannung) ab. Insbesondere kann die Kontrolleinheit 100 dazu ausgestaltet sein, die Energieabgabe (bzw. Energieaufnahme, allgemein Energiebilanz bzw. Leistungsbilanz) der Energieerzeugereinheit 20, des Klimageräts 10 und des Energiespeichers 30 in Abhängigkeit von der erfassten Messgröße zu steuern, und zwar derart, dass die vierte Bedingung erfüllt wird. Um Abregelungsverluste der Energieerzeugereinheit 20 zu vermeiden, ist die Kontrolleinheit 100 bevorzugt dazu ausgestaltet, die Energieaufnahme des Klimageräts 10 und/oder des Energiespeichers 30 bzw. die Energieabgabe des Energiespeichers 30 in Abhängigkeit von der erfassten Messgröße zu steuern. Wie oben beschrieben, können Änderungen in der Leistungsbilanz des Klimageräts 10 können durch entsprechende Steuerung der Heizleistung des Wärmeerzeugers 15 kompensiert werden.

Übersteigt die erfasste Frequenz der Netzspannung ihren Soll-Wert (z.B. ca. 50,2 Hz) kann die abgegebene Leistung (Wirkleistung) des Gebäude-Energiesystems (bzw. die Wirkleistung seiner Komponenten) reduziert werden, um zur Frequenzstabilisierung beizutragen. Die gewünschte Wirkleistung hängt von der erfassten Frequenz der Netzspannung, genauer von der Differenz zwischen der erfassten Frequenz der Netzspannung und ihrem Soll-Wert, ab.

Die vorgenannten Maßnahmen dienen der Frequenzhaltung des externen Stromnetzes 60, stellen also eine Dienstleistung an das Verteilnetz oder Inselnetz (als Bespiel des externen Stromnetzes 60) im Rahmen eines intelligenten Stromnetzes dar.

Alternativ oder zusätzlich kann die Kontrolleinheit 100 für den Fall der Frequenz der Netzspannung als erfasste Messgröße dazu ausgestaltet sein, Regelleistung (positiv oder negativ) in gewünschtem Umfang an das externe Stromnetz 60 (z.B. Verteilnetz oder Inselnetz) bereitzustellen. Dies kann durch geeignete gemeinsame Steuerung des Klimageräts 10, der Energieerzeugereinheit 20 und des Energiespeichers 30 geschehen. Eine mögliche fünfte Bedingung kann also die Größe (z.B. Vorzeichen und Absolutbetrag) von an das externe Stromnetz 60 bereitgestellter Regelleistung betreffen. Bei Unterschreitung des Soll-Werts der Frequenz der Netzspannung durch den Ist-Wert sollte positive Regelleistung bereitgestellt werden, d.h. Leistung an das externe Stromnetz 60 abgegeben werden. Bei Überschreitung des Soll-Werts der Frequenz der Netzspannung durch den Ist-Wert sollte negative Regelleistung bereitgestellt werden, d.h. Leistung durch das Gebäude-Energiesystem aufgenommen werden. Bevorzugt wird obige gemeinsame Steuerung derart durchgeführt, dass Abregelungsverluste der Energieerzeugereinheit 20 vermieden werden. Zur Bereitstellung positiver Regelleistung kann die Leistungsaufnahme des Energiespeichers 30 verringert, bzw. seine Leistungsabgabe erhöht werden. Gleichzeitig kann die Leistungsaufnahme des Klimageräts 10 verringert werden. Die Heizleistung des Wärmeerzeugers 15 kann entsprechend erhöht werden, um die gesamte Heizleistung (von Klimagerät 10 und Wärmeerzeuger 15) konstant zu halten. Zur Bereitstellung negativer Regelleistung können die Leistungsaufnahme des Energiespeichers 30 und/oder des Klimageräts 10 erhöht werden. Die Heizleistung des Wärmeerzeugers 15 kann entsprechend reduziert werden, um die gesamte Heizleistung konstant zu halten.

Zusätzlich oder alternativ kann die zumindest eine Bedingung in Abhängigkeit von der Tageszeit abgeleitet werden. Eine mögliche sechste Bedingung, die in Abhängigkeit von der Tageszeit abgeleitet wird, betrifft allgemein die Leistungseinspeisung bzw. Leistungsaufnahme am Netzanschlusspunkt 90.

Beispielsweise kann die Einspeisung in das externe Stromnetz zu bestimmten Tageszeiten, z.B. um die Mittagszeit, so weit wie möglich verringert werden. Geeignete Maßnahmen zur Verringerung der Leistungseinspeisung sind oben beschrieben.

Weiterhin kann die sechste Bedingung in Abhängigkeit von einem vorbestimmten Zeitplan für die Einspeisung oder Aufnahme elektrischer Energie (Leistung) in das oder aus dem externen Stromnetz 60 abgeleitet werden. Dieser Zeitplan kann in Abhängigkeit von Anforderungen des externen Stromnetzes 60 (bzw. des Netzbetreibers), die über den externen Datenbus 65 empfangen werden, durch die Kontrolleinheit 100 angepasst werden.

Die oben beschriebenen Maßnahmen stellen eine Dienstleitung an das Übertragungsnetz (als Beispiel für das externe Stromnetz 60) im Rahmen eines intelligenten Stromnetzes dar.

Es versteht sich, dass für das beschriebene Gebäude-Energiesystem bzw. die beschriebene Kontrolleinheit 100 eine Umschaltung zwischen verschiedenen zu berücksichtigenden erfassten Messgrößen, sowie zwischen verschiedenen zu erfüllenden Bedingungen erfolgen kann. Die Umschaltung kann dabei automatisch oder durch Nutzereingabe erfolgen, sowie ggf. auf Anforderung des Netzbetreibers.

Obenstehend wurde das erfindungsgemäße Gebäude-Energiesystem anhand konkreter Ausgestaltungen beschrieben. Soweit nicht gesondert angegeben, soll sich die vorliegende Offenbarung gleichsam auf eine entsprechende Kontrolleinheit für das Gebäude-Energiesystem und ein entsprechendes Steuerungsverfahren für das Gebäude-Energiesystem mit entsprechenden Verfahrensschritten erstrecken.

Die Erfindung wurde anhand konkreter Ausgestaltungen näher erläutert, ohne auf die konkreten Ausführungsformen begrenzt zu sein. Insbesondere ist es möglich, Merkmale der unterschiedlichen Ausführungsformen zu kombinieren und auch in den anderen Ausführungsformen einzusetzen.

## Patentansprüche

1. Kontrolleinheit (100) für ein System mit einem Klimagerät (10), einer Photovoltaikanlage (20) zur Erzeugung von elektrischer Energie und einem Energiespeicher (30) zum Speichern von elektrischer Energie, das mit einem Netzanschlusspunkt zur Einspeisung oder Aufnahme von elektrischer Energie in oder aus einem externen Stromnetz (60) in Verbindung steht,
wobei die Kontrolleinheit (100) dazu ausgestaltet ist, das Klimagerät (10), die Photovoltaikanlage (20) und den Energiespeicher (30) gemeinsam in Abhängigkeit von zumindest einer Bedingung für die mit der eingespeisten oder aufgenommenen elektrischen Energie assoziierten Stromstärke und/oder Spannung zu steuern; und
wobei die gemeinsame Steuerung des Klimageräts (10), der Photovoltaikanlage (20) und des Energiespeichers (30) die Steuerung der von dem Klimagerät (10) aufgenommenen Leistung, der von der Photovoltaikanlage (20) abgegebenen Leistung, und der von dem Energiespeicher (30) aufgenommenen oder abgegebenen Leistung beinhaltet;
wobei die Kontrolleinheit (100) dazu ausgestaltet ist, die zumindest eine Bedingung in Abhängigkeit von einer oder mehreren an dem Netzanschlusspunkt oder an einem anderen Punkt des externen Stromnetzes (60) erfassten Messgrößen abzuleiten;
wobei die Kontrolleinheit (100) ferner dazu ausgestaltet ist, einen gemeinsamen Wechselrichter für das Klimagerät (10), die Photovoltaikanlage (20) und den Energiespeicher (30) zu steuern;
wobei die erfasste Messgröße die Netzspannung betrifft; und
die Kontrolleinheit (100) dazu ausgestaltet ist, den gemeinsamen Wechselrichter in Abhängigkeit von der erfassten Messgröße zur Bereitstellung einer von der erfassten Messgröße abhängigen Blindleistung zu steuern.

2. Kontrolleinheit (100) nach Anspruch 1, die dazu ausgestaltet ist, die zumindest eine Bedingung in Abhängigkeit von einer Tageszeit und/oder einem vorbestimmten Zeitplan für die Einspeisung oder Aufnahme von elektrischer Energie in oder aus dem externen Stromnetz (60) abzuleiten; und
die vorzugsweise ferner dazu ausgestaltet ist, das Klimagerät (10), die Photovoltaikanlage (20) und den Energiespeicher (30) derart zu steuern, dass die Energieeinspeisung in das externe Stromnetz (60) auf null reduziert wird.

3. Kontrolleinheit (100) nach zumindest einem der vorhergehenden Ansprüche,
die ferner dazu ausgestaltet ist, eine gemeinsame Puffereinheit zur Speicherung elektrischer Energie für das Klimagerät (10), die Photovoltaikanlage (20) und den Energiespeicher (30) zu steuern.

4. Kontrolleinheit (100) nach zumindest einem der Ansprüche 1 bis 3,
wobei die erfasste Messgröße die Frequenz der Netzspannung betrifft und die Kontrolleinheit (100) dazu ausgestaltet ist, die Wirkleistung des Klimageräts (10) und/oder des Energiespeichers (30) in Abhängigkeit von der erfassten Messgröße betreffend die Frequenz zu steuern; und/oder
wobei die erfasste Messgröße die Frequenz der Netzspannung betrifft und die Kontrolleinheit (100) dazu ausgestaltet ist, das Klimagerät (10), die Photovoltaikanlage (20) und den Energiespeicher (30) derart zu steuern, dass eine positive Regelleistung an das externe Stromnetz (60) bereitgestellt wird, falls ein Ist-Wert der Frequenz der Netzspannung unterhalb eines Soll-Werts für die Frequenz der Netzspannung liegt, und eine negative Regelleistung an das externe Stromnetz (60) bereitgestellt wird, falls der Ist-Wert der Frequenz der Netzspannung oberhalb des Soll-Werts für die Frequenz der Netzspannung liegt.

5. Kontrolleinheit (100) nach zumindest einem der vorhergehenden Ansprüche,
wobei das System zusätzlich einen Wärmeerzeuger (15) umfasst und die Kontrolleinheit (100) dazu ausgestaltet ist, die von dem Wärmeerzeuger (15) erzeugte Wärmemenge zu steuern; und
die Kontrolleinheit (100) vorzugsweise dazu ausgestaltet ist, die von dem Wärmeerzeuger (15) erzeugte Wärmemenge in Abhängigkeit von einem Istwert und einem Sollwert für die Energieaufnahme des Klimageräts (10) zu steuern.

6. Kontrolleinheit (100) nach Anspruch 5, wobei der Wärmeerzeuger (15) dazu ausgestaltet ist, Wärme durch Verbrennung eines Brennstoffs zu erzeugen.

7. Gebäude-Energiesystem das mit einem Netzanschlusspunkt zur Einspeisung oder Aufnahme vom elektrischer Energie an oder von einem externen Stromnetz (60) verbindbar ist und das ein Klimagerät (10), eine Photovoltaikanlage (20) zur Erzeugung von elektrischer Energie, einen Energiespeicher (30) zum Speichern von elektrischer Energie und die Kontrolleinheit (100) gemäß zumindest einem der vorhergehenden Ansprüche umfasst,
wobei des Gebäude-Energiesystem vorzugsweise zusätzlich einen Wärmeerzeuger (15) umfasst und die Kontrolleinheit (100) vorzugsweise dazu ausgestaltet ist, die von dem Wärmeerzeuger (15) erzeugte Wärmemenge zu steuern.

8. Verfahren zur Steuerung eines Systems mit einem Klimagerät (10), einer Photovoltaikanlage (20) zur Erzeugung von elektrischer Energie und einem Energiespeicher (30) zum Speichern von elektrischer Energie, das mit einem Netzanschlusspunkt zur Einspeisung oder Aufnahme von elektrischer Energie in oder aus einem externen Stromnetz (60) in Verbindung steht, wobei das Verfahren umfasst:
gemeinsames Steuern des Klimageräts (10), der Photovoltaikanlage (20) und des Energiespeichers (30) in Abhängigkeit von zumindest einer Bedingung für die mit der eingespeisten oder aufgenommenen elektrischen Energie assoziierten Stromstärke und/oder Spannung;
Empfangen einer oder mehrerer an dem Netzanschlusspunkt oder einem anderen Punkt des externen Stromnetzes (60) erfasster Messgrößen; und
Ableiten der zumindest einen Bedingung in Abhängigkeit von den empfangenen Messgrößen;
wobei das System einen gemeinsamen Wechselrichter für das Klimagerät (10), die Photovoltaikanlage (20) und den Energiespeicher (30) umfasst, wobei die erfasste Messgröße die Netzspannung betrifft und wobei das Verfahren den weiteren Schritt aufweist:
Steuern des gemeinsamen Wechselrichters in Abhängigkeit von der erfassten Messgröße zur Bereitstellung einer von der erfassten Messgröße abhängigen Blindleistung.

9. Verfahren nach Anspruch 8, mit dem weiteren Schritt:
Ableiten der zumindest einen Bedingung in Abhängigkeit von einer Tageszeit und/oder einem vorbestimmten Zeitplan für die Einspeisung oder Aufnahme von elektrischer Energie in oder aus dem externen Stromnetz (60),
wobei die Steuerung des Klimageräts (10), der Photovoltaikanlage (20) und des Energiespeichers (30) vorzugsweise derart erfolgt, dass die Energieeinspeisung in das externe Stromnetz (60) auf null reduziert wird.

10. Verfahren nach zumindest einem der Ansprüche 8 bis 9,
wobei die empfangene Messgröße die Frequenz der Netzspannung betrifft und wobei das Verfahren den weiteren Schritt Steuern der Wirkleistung des Klimageräts (10) und/oder des Energiespeichers (30) in Abhängigkeit von der empfangenen Messgröße betreffend die Frequenz aufweist; und/oder
wobei die empfangene Messgröße die Frequenz der Netzspannung betrifft und die Steuerung des Klimageräts (10), der Photovoltaikanlage (20) und des Energiespeichers (30) derart erfolgt, dass eine positive Regelleistung an das externe Stromnetz (60) bereitgestellt wird, falls ein Ist-Wert der Frequenz der Netzspannung unterhalb eines Soll-Werts für die Frequenz der Netzspannung liegt, und eine negative Regelleistung an das externe Stromnetz (60) bereitgestellt wird, falls der Ist-Wert der Frequenz der Netzspannung oberhalb des Soll-Werts für die Frequenz der Netzspannung liegt.

11. Verfahren nach zumindest einem der Ansprüche 8 bis 9, wobei das System zusätzlich einen Wärmeerzeuger (15) umfasst und wobei das Verfahren den weiteren Schritt Steuern der von dem Wärmeerzeuger (15) erzeugten Wärmemenge aufweist; und
I wobei die Steuerung der von dem Wärmeerzeuger (15) erzeugten Wärmemenge vorzugsweise in Abhängigkeit von einem Istwert und einem Sollwert für die Energieaufnahme des Klimageräts (10) erfolgt.

## Claims

1. A control unit (100) for a system comprising an air conditioner (10), a photovoltaic system (20) for generating electrical energy and an energy storage device (30) for storing electrical energy, said system being connected to a grid connection point for supplying or receiving electrical energy to or from an external power grid (60),
wherein said control unit (100) is configured to jointly control said air conditioner (10), said photovoltaic system (20), and said energy storage device (30) based on at least one condition for the current and/or voltage associated with the electrical energy supplied or received; and
wherein the joint control of said air conditioner (10), said photovoltaic system (20), and said energy storage device (30) includes the control of the power received by said air conditioner (10), the power output from said photovoltaic system (20), and the power received or output by said energy storage device (30);
wherein said control unit (100) is configured to derive a condition based on one or more measured quantities detected at said grid connection point or at another point of said external power grid (60);
wherein said control unit (100) is further configured to control a common inverter for said air conditioner (10), said photovoltaic system (20), and said energy storage device (30);
wherein said measurement quantity relates to the mains voltage; and
said control unit (100) is configured to control said common inverter based on said detected measurement quantity to provide reactive power dependent on said detected measurement quantity.

2. The control unit (100) according to claim 1, wherein said control unit is configured to derive said at least one condition based on a time of day and/or a predetermined schedule for supplying or receiving electrical energy to or from said external power grid (60); and
said control unit preferably further being configured to control said air conditioner (10), said photovoltaic system (20), and said energy storage device (30) such that the energy supply to said external power grid (60) is reduced to zero.

3. The control unit (100) according to at least one of the preceding claims, wherein said control unit is further configured to control a common buffer unit for storing electrical energy for said air conditioner (10), said photovoltaic system (20) and said energy storage device (30).

4. Control unit (100) according to at least one of claims 1 to 3,
wherein said detected measurement quantity relates to the frequency of the mains voltage and said control unit (100) is configured to control the active power of said air conditioner (10) and/or said energy storage device (30) based on said detected measurement quantity related to the frequency; and/or
wherein said detected measurement quantity relates to the frequency of the mains voltage and said control unit (100) is configured to control said air conditioner (10), said photovoltaic system (20), and said energy storage device (30) such that a positive control power is provided to said external power grid (60) if an actual value of the frequency of the mains voltage is below a target value for the frequency of the mains voltage, and a negative control power is provided to said external power grid (60) if the actual value of the frequency of the mains voltage is above the target value for the frequency of the mains voltage.

5. The control unit (100) according to at least one of the preceding claims, wherein said system additionally comprises a heat generator (15) and said control unit (100) is configured to control the amount of heat generated by said heat generator (15); and
said control unit (100) is preferably configured to control the amount of heat generated by said heat generator (15) based on an actual value and a target value for the energy consumption of said air conditioner (10).

6. The control unit (100) according to claim 5, wherein said heat generator (15) is configured to generate heat by combustion of a fuel.

7. A building energy system which is connectable to a grid connection point for supplying or receiving electrical energy to or from an external power grid (60) and which comprises an air conditioner (10), a photovoltaic system (20) for generating electrical energy, an energy storage device (30) for storing electrical energy, and the control unit (100) according to at least one of the preceding claims,
wherein said building energy system preferably additionally comprises a heat generator (15) and said control unit (100) is preferably configured to control the amount of heat generated by said heat generator (15).

8. A method of controlling a system comprising an air conditioner (10), a photovoltaic system (20) for generating electrical energy, and an energy storage device (30) for storing electrical energy, said system being connected to a grid connection point for supplying or receiving electrical energy to or from an external power grid (60), said method comprising:
jointly controlling said air conditioner (10), said photovoltaic system (20), and said energy storage device (30) based on at least one condition for the current and/or voltage associated with the electrical energy supplied or received;
receiving one or more measurement quantities detected at said grid connection point or another point of said external power grid (60); and
deriving the at least one condition based on said received measurement quantities;
wherein said system comprises a common inverter for said air conditioner (10), said photovoltaic system (20), and said energy storage device (30), wherein said detected measurement quantity relates to the mains voltage, and wherein said method comprises the further step of:
controlling said common inverter based on said detected measurement quantity to provide a reactive power dependent on said detected measurement quantity.

9. The method according to claim 8, further comprising the step of:
deriving the at least one condition based on a time of day and/or a predetermined schedule for supplying or receiving electrical energy to or from said external power grid,
wherein the control of said air conditioner (10), said photovoltaic system (20) and said energy storage device (30) preferably is performed such that the energy supply to said external power grid (60) is reduced to zero.

10. The method according to at least one of claims 8 to 9,
wherein said received measurement quantity relates to the frequency of the mains voltage and wherein said method comprises the further step of controlling the active power of said air conditioner (10) and/or of said energy storage device (30) based on said received measurement quantity related to the frequency; and/or
wherein said received measurement quantity relates to the frequency of the mains voltage and the control of said air conditioner (10), said photovoltaic system (20) and said energy storage device (30) is performed such that a positive control power is provided to said external power grid (60) if an actual value of the frequency of the mains voltage is below a target value for the frequency of the mains voltage, and a negative control power is supplied to said external power grid (60) if the actual value of the frequency of the mains voltage is above the target value for the frequency of the mains voltage.

11. The method according to at least one of claims 8 to 9, wherein said system additionally comprises a heat generator (15) and wherein said method comprises a further step of controlling the amount of heat generated by said heat generator (15); and
wherein the control of the amount of heat generated by said heat generator (15) is preferably performed based on an actual value and a target value for the energy consumption of said air conditioner (10).

## Revendications

1. Unité de contrôle (100) pour un système pourvu d'un appareil de climatisation (10), d'une installation photovoltaïque (20) pour générer de l'énergie électrique et d'un accumulateur d'énergie (30) pour accumuler de l'énergie électrique, système qui est en connexion avec un point de raccordement au réseau pour alimenter ou absorber de l'énergie électrique dans ou depuis d'un réseau électrique externe (60),
dans laquelle
l'unité de contrôle (100) est conçue pour commander l'appareil de climatisation (10), l'installation photovoltaïque (20) et l'accumulateur d'énergie (30) conjointement en fonction d'au moins une condition pour l'intensité de courant et/ou pour la tension associée à l'énergie électrique alimentée ou absorbée ; et
la commande commune de l'appareil de climatisation (10), de l'installation photovoltaïque (20) et de l'accumulateur d'énergie (30) inclut la commande de la puissance absorbée par l'appareil de climatisation (10), de la puissance dégagée par l'installation photovoltaïque (20) et de la puissance absorbée ou dégagée par l'accumulateur d'énergie (30) ;
l'unité de contrôle (100) est conçue pour déduire ladite au moins une condition en fonction d'une ou de plusieurs grandeurs de mesure détectées au point de raccordement au réseau ou à un autre point du réseau électrique externe (60) ;
l'unité de contrôle (100) est en outre conçue pour commander un onduleur commun pour l'appareil de climatisation (10), pour l'installation photovoltaïque (20) et pour l'accumulateur d'énergie (30) ;
la grandeur de mesure détectée concerne la tension du réseau ; et
l'unité de contrôle (100) est conçue pour commander l'onduleur commun en fonction de la grandeur de mesure détectée pour fournir une puissance réactive dépendante de la grandeur de mesure détectée.

2. Unité de contrôle (100) selon la revendication 1, qui est conçue pour déduire ladite au moins une condition en fonction d'une heure du jour et/ou d'un horaire prédéterminé pour l'alimentation ou pour l'absorption d'énergie électrique dans ou depuis le réseau électrique externe (60) ; et
qui est en outre conçue de préférence pour commander l'appareil de climatisation (10), l'installation photovoltaïque (20) et l'accumulateur d'énergie (30) de telle sorte que l'alimentation en énergie dans le réseau électrique externe (60) est réduite à zéro.

3. Unité de contrôle (100) selon l'une au moins des revendications précédentes, qui est en outre conçue pour commander une unité tampon commune pour accumuler de l'énergie électrique pour l'appareil de climatisation (10), pour l'installation photovoltaïque (20) et pour l'accumulateur d'énergie (30).

4. Unité de contrôle (100) selon l'une au moins des revendications 1 à 3,
dans laquelle
la grandeur de mesure détectée concerne la fréquence de la tension du réseau, et
l'unité de contrôle (100) est conçue pour commander la puissance active de l'appareil de climatisation (10) et/ou de l'accumulateur d'énergie (30) en fonction de la grandeur de mesure concernant la fréquence ; et/ou
la grandeur de mesure détectée concerne la fréquence de la tension du réseau et l'unité de contrôle (100) est conçue pour commander l'appareil de climatisation (10), l'installation photovoltaïque (20) et l'accumulateur d'énergie (30) de telle sorte qu'une puissance de réglage positive est fournie au réseau électrique externe (60), si une valeur réelle de la fréquence de la tension du réseau est inférieure à une valeur de consigne pour la fréquence de la tension du réseau, et qu'une puissance de réglage négative est fournie au réseau électrique extérieure (60), si la valeur réelle de la fréquence de la tension du réseau est supérieure à la valeur de consigne pour la fréquence de la tension du réseau.

5. Unité de contrôle (100) selon l'une au moins des revendications précédentes, dans laquelle
le système comprend en supplément un générateur de chaleur (15) et l'unité de contrôle (100) est conçue pour commander la quantité de chaleur générée par le générateur de chaleur (15) ; et
l'unité de contrôle (100) est de préférence conçue pour commander la quantité de chaleur générée par le générateur de chaleur (15) en fonction d'une valeur réelle et d'une valeur de consigne pour l'absorption d'énergie de l'appareil de climatisation (10).

6. Unité de contrôle (100) selon la revendication 5,
dans laquelle
le générateur de chaleur (15) est conçu pour générer de la chaleur par combustion d'un combustible.

7. Système énergétique de bâtiment qui est susceptible d'être connecté à un point de raccordement au réseau pour alimenter ou absorber de l'énergie électrique dans ou depuis un réseau électrique externe (60) et qui comprend un appareil de climatisation (10), une installation photovoltaïque (20) pour générer de l'énergie électrique, un accumulateur d'énergie (30) pour accumuler de l'énergie électrique et l'unité de contrôle (100) selon l'une des revendications précédentes,
dans lequel
le système énergétique de bâtiment comprend de préférence en supplément un générateur de chaleur (15), et l'unité de contrôle (100) est de préférence conçue pour commander la quantité de chaleur générée par le générateur de chaleur (15).

8. Procédé de commande d'un système pourvu d'un appareil de climatisation (10), d'une installation photovoltaïque (20) pour générer de l'énergie électrique et d'un accumulateur d'énergie (30) pour accumuler de l'énergie électrique, système qui
est en connexion avec un point de raccordement au réseau pour alimenter ou absorber de l'énergie électrique dans ou depuis un réseau électrique externe (60), le procédé comprenant :
la commande commune de l'appareil de climatisation (10), de l'installation photovoltaïque (20) et de l'accumulateur d'énergie (30) en fonction d'au moins une condition pour l'intensité de courant et/ou pour la tension associée à l'énergie électrique alimentée ou absorbée ; et
la réception d'une ou de plusieurs grandeurs de mesure détectées au point de raccordement au réseau ou à un autre point du réseau électrique externe (60); et
la déduction de ladite au moins condition en fonction des grandeurs de mesure reçues ;
le système comprenant un onduleur commun pour l'appareil de climatisation (10), pour l'installation photovoltaïque (20) et pour l'accumulateur d'énergie (30), la grandeur de mesure détectée concernant la tension du réseau, et le procédé comprenant l'autre étape consistant à :
commander l'onduleur commun en fonction de la grandeur de mesure détectée pour fournir une puissance réactive dépendante de la grandeur de mesure détectée.

9. Procédé selon la revendication 8, comprenant l'autre étape consistant à :
déduire ladite au moins une condition en fonction d'une heure du jour et/ou d'un horaire prédéterminé pour l'alimentation ou l'absorption d'énergie électrique dans ou depuis le réseau électrique externe (60),
la commande de l'appareil de climatisation (10), de l'installation photovoltaïque (20) et de l'accumulateur d'énergie (30) s'effectuant de préférence de telle sorte que l'alimentation en énergie dans le réseau électrique externe (60) est réduite à zéro.

10. Procédé selon l'une au moins des revendications 8 à 9,
la grandeur de mesure reçue concerne la fréquence de la tension du réseau, et
le procédé comprend l'autre étape consistant à commander la puissance active de l'appareil de climatisation (10) et/ou de l'accumulateur d'énergie (30) en fonction de la grandeur de mesure reçue concernant la fréquence ; et/ou
la grandeur de mesure détectée concerne la fréquence de la tension du réseau et la commande de l'appareil de climatisation (10), de l'installation photovoltaïque (20) et de l'accumulateur d'énergie (30) s'effectue de telle sorte qu'une puissance de réglage positive est fournie au réseau électrique externe (60), si une valeur réelle de la fréquence de la tension du réseau est inférieure à une valeur de consigne pour la fréquence de la tension du réseau, et qu'une puissance de réglage négative est fournie au réseau électrique extérieure (60), si la valeur réelle de la fréquence de la tension du réseau est supérieure à la valeur de consigne pour la fréquence de la tension du réseau.

11. Procédé selon l'une au moins des revendications 8 à 9,
dans lequel
le système comprend en supplément un générateur de chaleur (15), et le procédé comprend l'autre étape consistant à commander la quantité de chaleur générée par le générateur de chaleur (15) ; et
la commande de la quantité de chaleur générée par le générateur de chaleur (15) s'effectue de préférence en fonction d'une valeur réelle et d'une valeur de consigne pour l'absorption d'énergie de l'appareil de climatisation (10).
